# FASCICULE DE BREVET EUROPEEN

(11) **EP 0 926 007 B1**
(45) Date de publication et mention de la délivrance du brevet: **27.03.2002**
(21) Numéro de dépôt: 98460062.7
(22) Date de dépôt: 23.12.1998
(51) Int. Cl.: B60R 5/04, B60J 1/20

(54) **Tablette arrière de véhicule munie d'un store pare-soleil**
Heckplatte für Kraftfahrzeug mit Sonnenschutzrolle
Vehicle rear parcel shelf with roller-blind

(30) Priorité: 23.12.1997 FR 9716317
(43) Date de publication de la demande: 30.06.1999
(73) Titulaire: Wagon Automotive, 79302 Bressuire Cédex (FR)
(72) Inventeur: Jeuffray, Jean-Marie, 79300 Bressuire (FR)
(74) Mandataire: Vidon, Patrice

(56) Documents cités:
- EP-A- 0 424 327
- DE-U- 9 313 436
- FR-A- 2 566 722
- US-A- 5 067 546
- PATENT ABSTRACTS OF JAPAN vol. 095, no. 004, 31 mai 1995 & JP 07 017245 A (HAYASHI GIJUTSU KENKYUSHO:KK), 20 janvier 1995

## Description

La présente invention concerne une tablette arrière de véhicule automobile, munie d'un store pare-soleil, par exemple translucide pour filtrer la lumière pénétrant dans le véhicule par la lunette arrière.

La plupart des véhicules automobiles possède une tablette arrière surplombée par la lunette arrière du véhicule. Il est aujourd'hui courant de mettre en place des stores translucides pour filtrer la lumière pénétrant dans le véhicule par cette lunette arrière et les constructeurs profitent de la présence de cette tablette pour fixer le store de manière que son boîtier soit invisible. Pour ce faire, on pratique une fente dans la tablette permettant de mettre en place le boîtier du store contenant l'enrouleur de la toile sous la tablette, la toile étant tirée au travers de cette fente.

Cependant, cette fente est de grande largeur et affaiblit la résistance mécanique de la tablette qui risque de s'affaisser au voisinage de la fente lorsque des objets lourds y sont posés.

Une tablette arrière ayant les caractéristiques du preambule de la revendication 1 est décrit dans le document EP-A-0 424 327.

Il existe donc un besoin non résolu à ce jour de manière commode d'une tablette arrière ayant une bonne résistance mécanique et comportant un store pare-soleil dont le boîtier est masqué à la vue des occupants du véhicule équipé de la tablette.

A cet effet, on prévoit, selon l'invention, une tablette arrière de véhicule automobile, munie d'un store pare-soleil comprenant un rouleau enrouleur-dérouleur d'une toile, le rouleau ayant des extrémités montées pour tourner dans des paliers réunis par une traverse, la tablette comportant une portion en forme de gouttière débouchant sur une face de la tablette et formant un logement pour le store, le store étant maintenu dans la gouttière par des moyens de fixation de façon que la traverse et un bord longitudinal de la gouttière délimitent une fente de passage de la toile et que la traverse affleure ladite face pour former un support pour un revêtement recouvrant ladite face, le revêtement comprenant une fente en regard de la fente délimitée par la traverse et le bord longitudinal de la gouttière.

Le store pare-soleil s'étend ainsi entre la tablette et le revêtement. Le store est de cette façon masqué par le revêtement sans qu'il soit nécessaire de pratiquer une fente dans l'épaisseur de la tablette. En outre, la gouttière constitue, outre un boîtier pour le store pare-soleil, une nervure de raidissage de la tablette. Cette forme de nervure, conjuguée à l'absence de fente, confère à la tablette une bonne résistance. Un autre avantage de cette structure réside dans sa simplicité et dans la facilité de montage qui en découle.

Avantageusement, la toile a une portion d'extrémité libre munie d'une barre de tirage présentant une dimension transversale supérieure à la largeur de la fente ménagée dans le revêtement.

De préférence alors, la barre de tirage est pourvue d'ailettes latérales pour reposer sur le revêtement de part et d'autre de la fente, les ailettes étant avantageusement solidaires d'un organe d'accrochage fixé à la barre de tirage.

L'organe d'accrochage assure ainsi une double fonction à savoir le maintien de la barre de tirage au-dessus de la fente du revêtement pour un état enroulé de la toile afin de permettre la préhension de la barre de tirage, et l'accrochage de la barre de tirage à une partie du véhicule pour assurer le maintien de la toile dans son état déroulé.

D'autres avantages et caractéristiques de l'invention ressortiront à la lecture de la description qui suit d'un mode de réalisation particulier non limitatif de l'invention.

Il sera fait référence aux dessins annexés, parmi lesquels :

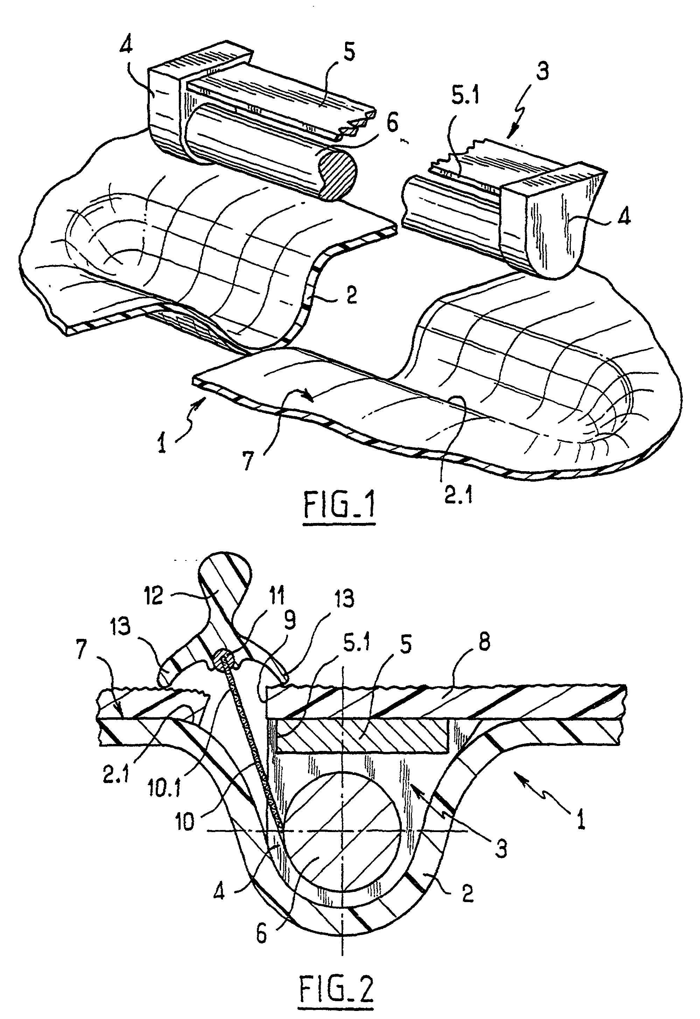

- la figure 1 est une vue partielle en perspective d'une tablette selon l'invention en cours de montage,
- la figure 2 est une vue partielle en coupe transversale de la tablette selon l'invention.

En référence aux figures, la tablette arrière de véhicule automobile, généralement désignée en 1, comprend une portion en forme de gouttière 2. La gouttière 2 est par exemple réalisée par déformation plastique lors du thermoformage de la tablette 1 de manière à former une nervure renforçant la tablette.

Un store généralement désigné en 3 s'étend dans la gouttière 2.

Le store 3 comprend des paliers 4 ayant chacun une partie supérieure à laquelle est fixée une extrémité d'une traverse 5 réunissant les deux paliers. Les extrémités d'un rouleau 6 enrouleur-dérouleur d'une toile 7 sont montées pour tourner dans les paliers 4.

Le store 3 est maintenu dans la gouttière 2 par l'intermédiaire de moyens de fixation des paliers 4 à la surface concave de la gouttière 2. Les moyens de fixation sont ici de la colle, mais pourraient être également constitués par tout organe adapté (vis, agrafes, crochets, clips...). Les paliers 4 ont de préférence une forme extérieure épousant la forme interne de la gouttière 2.

La traverse 5 a une surface supérieure affleurant la face 7 de la tablette 1 dans laquelle débouche la gouttière 2. Un revêtement 8, tel qu'une moquette, recouvre la face 7 et la face supérieure de la traverse 5. Le revêtement 8 est fixé sur la face 7 et la face supérieure de la traverse 5 de façon classique par collage. On comprend que la face 7 est destinée à constituer la face supérieure de la tablette 1 une fois montée dans un véhicule automobile.

Un bord longitudinal 5.1 de la traverse 5 s'étend à distance d'un bord longitudinal 2.1 de la gouttière 2 et délimite avec ce bord longitudinal 2.1 une fente.

Une fente 9 s'étend dans le revêtement 8 en regard de la fente définie par les bords longitudinaux 2.1 et 5.1.

Une portion d'extrémité 10.1 de la toile 10 s'étend au travers desdites fentes.

Une barre de tirage 11 s'étend le long de la portion d'extrémité 10.1 de la toile 10.

Un organe d'accrochage 12, fixé à la barre de tirage 11 par encliquetage ou collage, comprend deux ailettes latérales 13. Les ailettes latérales 13 s'étendent en saillie de l'organe d'accrochage 12 perpendiculairement à la barre de tirage 11 pour reposer sur le revêtement 8 de part et d'autre de la fente 9 lorsque la toile est dans un état enroulé.

L'organe d'accrochage 12 est en outre agencé pour coopérer avec une partie de l'habitacle du véhicule afin de maintenir la toile dans son état déroulé devant la lunette arrière du véhicule.

On comprend que pour monter le store pare-soleil dans la tablette arrière, on commence par coller les paliers 4 dans le fond de la gouttière. Ensuite, on fixe le revêtement 8 en faisant passer la portion d'extrémité 10.1 de la toile 10 et la barre de tirage 11 par la fente 9. L'organe d'accrochage 12 est alors fixé sur la barre de tirage 11. Le montage ainsi réalisé est particulièrement simple et rapide.

Bien entendu l'invention n'est pas limitée au mode de réalisation décrit et on peut y apporter des variantes de réalisation sans sortir du cadre de l'invention tel que défini par les revendications.

En particulier, on pourrait prévoir que la barre de tirage ait un diamètre supérieur à la largeur de la fente 9, ou bien un organe d'accrochage sans ailettes Présentant une dimension transversale supérieure à la largeur de la fente 9. Les ailettes ou tout autre élément en saillie latérale par rapport à la barre de tirage pourraient être directement solidaires de la barre de tirage.

Diverses variantes peuvent bien sûr être envisagées. Par exemple, le store pare-soleil peut être fixé d'une autre manière dans la tablette arrière, par exemple par clipsage.

Par ailleurs, le revêtement peut être mis en oeuvre de façon différente. Notamment, le revêtement de la tablette en elle-même peut s'arrêter au bord de la gouttière ou au voisinage de celle-ci. Dans ce cas, la traverse du store est équipée en elle-même d'un revêtement similaire, ou assorti.

Selon encore une autre approche, un revêtement complet (ou partiel) de la tablette peut être formé dans le prolongement du revêtement de la traverse. Cette approche est intéressante par exemple dans le cas où le store est vendu de façopn optionnel. L'ensemble store plus revêtement est alors mis de façon simple en lieu et place du revêtement d'origine.

## Revendications

1. Tablette arrière de véhicule automobile (1), munie d'un store (3) pare-soleil comprenant un rouleau (6) enrouleur-dérouleur d'une toile (10), le rouleau (6) ayant des extrémités montées pour tourner dans des paliers (4) réunis par une traverse (5), **caractérisée en ce que** ladite tablette (1) comporte une portion en forme de gouttière (2) débouchant sur une face (7) de la tablette et formant un logement pour le store (3), le store étant mis en place dans la gouttière (12) de façon que la traverse (5) et un bord longitudinal (2.1) de la gouttière délimitent une fente de passage de la toile (10).

2. Tablette selon la revendication 1, **caractérisée en ce que** la toile (10) a une portion d'extrémité libre (10.1) munie d'une barre de tirage (11) présentant une dimension transversale supérieure à la largeur de la fente (9) ménagée dans le revêtement (8).

3. Tablette selon la revendication 2, **caractérisée en ce que** la barre de tirage (11) est pourvue d'ailettes latérales (13) pour reposer sur le revêtement (18) de part et d'autre de la fente (9).

4. Tablette selon la revendication 3, **caractérisée en ce que** les ailettes (13) sont solidaires d'un organe d'accrochage (12) fixé à la barre de tirage (11).

5. Tablette selon l'une quelconque des revendications 1 à 4, **caractérisée en ce que** ledit store (3) est maintenu par des moyens de fixation dans ladite gouttière (12).

6. Tablette selon l'une quelconque des revendications 1 à 5, **caractérisée en ce que** la traverse (5) affleure ladite face (7) pour former un support pour un revêtement (8) recouvrant ladite face le revêtement (8) comprenant une fente (9) en regard de la fente délimitée par la traverse et le bord longitudinal de la gouttière.

7. Tablette selon l'une quelconque des revendications 1 à 5, **caractérisée en ce que** ladite traverse (5) porte un revêtement assorti au revêtement (8) de ladite tablette (1).

8. Tablette selon l'une quelconque des revendications 1 à 5, **caractérisé en ce que** ladite traverse (5) porte un revêtement qui s'étend au-delà de ladite traverse (5), de façon à couvrir au moins une portion de ladite tablette (1).

9. Store (3) pare-soleil destiné à mettre mis en place sur une tablette (1) selon l'une quelconque des revendications 1 à 8, le dit store comprenant des paliers (4) présentant des moyens de solidarisation coopérant avec la surface concave d'une gouttière (2) ménagée dans une tablette selon l'une quelconque des revendications 1 à 8.

10. Store (3) pare-soleil selon la revendication 9, **caractérisé en ce que** lesdits paliers (4) ont une forme extérieure épousant la forme interne de ladite gouttière (2).

## Patentansprüche

1. Hintere Ablage für Personenkraftwagen (1), die über ein Sonnenrollo (3) verfügt, das eine Wickelwelle (6) zum Auf- und Abrollen eines Stoffrollos (10) umfasst, wobei die Enden der Wickelwelle (6) so ausgeführt sind, dass sie drehbar in Lagern (4) eingebaut sind, welche über eine Verbindungsleiste (5) miteinander verbunden sind,
**dadurch gekennzeichnet, dass** die Ablage (1) einen muldenförmigen Teil (2) aufweist, der auf eine Fläche (7) der Ablage mündet und ein Gehäuse für das Sonnenrollo (3) bildet, wobei das Rollo so in die Mulde (2) eingebracht wird, dass die Verbindungsleiste (5) und ein Längsrand (2.1) der Mulde einen Schlitz für den Durchgang des Stoffes (10) begrenzen.

2. Ablage nach Anspruch 1,
**dadurch gekennzeichnet, dass** das Stoffrollo (10) ein freies Ende (10.1) aufweist, das mit einer Zugstange (11) versehen ist, die breiter ist als der in der Verkleidung (8) angebrachte Schlitz (9).

3. Ablage nach Anspruch 2,
**dadurch gekennzeichnet, dass** die Zugstange (11) über seitliche Flügel (13) verfügt, die auf beiden Seiten des Schlitzes (9) auf der Verkleidung (8) aufliegen.

4. Ablage nach Anspruch 3,
**dadurch gekennzeichnet, dass** die Flügel (13) Teile eines an der Zugstange (11) angebrachten Vorrichtung zum Einhaken (12) sind.

5. Ablage nach einem der Ansprüche 1 bis 4,
**dadurch gekennzeichnet, dass** das Sonnenrollo (3) durch Befestigungsmittel in der Mulde (2) gehalten wird.

6. Ablage nach einem der Ansprüche 1 bis 5,
**dadurch gekennzeichnet, dass** die Verbindungsleiste (5) mit der Fläche (7) bündig ist, um eine Unterlage für eine Verkleidung (8) für diese Fläche zu bilden, wobei die Verkleidung (8) einen Schlitz (9) aufweist, der dem durch die Verbindungsleiste und dem Längsrand der Mulde gebildeten Schlitz gegenüber liegt.

7. Ablage nach einem der Ansprüche 1 bis 5,
**dadurch gekennzeichnet, dass** die Verbindungsleiste (5) eine zu der Verkleidung (8) der Ablage (1) passende Verkleidung aufweist.

8. Ablage nach einem der Ansprüche 1 bis 5,
**dadurch gekennzeichnet, dass** die Verbindungsleiste (5) eine Verkleidung aufweist, die sich über die Verbindungsleiste (5) hinausstreckt, so dass sie zumindest die Ablage (1) teilweise bedeckt.

9. Sonnenrollo (3), das auf einer Ablage (1) angebracht werden soll, nach einem der Ansprüche 1 bis 8, wobei das Rollo über Lager (4) verfügt, welche Mittel aufweisen, die mit der konkaven Fläche der Mulde (2) einer Ablage nach einem der Ansprüche 1 bis 8 zusammenwirken.

10. Sonnenrollo (3) nach Anspruch 9,
**dadurch gekennzeichnet, dass** die äußere Form der Lager (4) derart gestaltet ist, dass sie der inneren Form der Mulde (2) angepasst sind.

## Claims

1. Motor vehicle rear parcel shelf (1) equipped with a sun blind (3) comprising a roller (6) for winding/unwinding a canvas (10), the roller (6) having ends mounted to rotate in bearings (4) connected by a cross member (5), **characterized in that** the said shelf (1) comprises a portion in the form of a gutter (2) opening onto one face (7) of the shelf and forming a housing for the blind (3), the blind being fitted in the gutter (12) in such a way that the cross member (5) and a longitudinal edge (2.1) of the gutter delimit a slit through which the canvas (10) can pass.

2. Shelf according to Claim 1, **characterized in that** the canvas (10) has a free end portion (10.1) equipped with a pull bar (11) having a transverse dimension greater than the width of the slit (9) formed in the trim (8).

3. Shelf according to Claim 2, **characterized in that** the pull bar (11) has lateral fins (13) to rest against the trim (8) on each side of the slit (9).

4. Shelf according to Claim 3, **characterized in that** the fins (13) are secured to a catching member (12) fixed to the pull bar (11).

5. Shelf according to any one of Claims 1 to 4,
**characterized in that** the said blind (3) is held in the said gutter (12) by fixing means.

6. Shelf according to any one of Claims 1 to 5, **characterized in that** the cross member (5) lies flush with the said face (7) to form a support for a trim (8) covering the said face, the trim (8) having a slit (9) facing the slit delimited by the cross member and the longitudinal edge of the gutter.

7. Shelf according to any one of Claims 1 to 5, **characterized in that** the said cross member (5) bears a trim that complements the trim (8) of the said shelf (1).

8. Shelf according to any one of Claims 1 to 5, **characterized in that** the said cross member (5) bears a trim which extends beyond the said cross member (5) so as to cover at least a portion of the said shelf (1).

9. Sun blind (3) intended to be fitted to a shelf (1) according to any one of Claims 1 to 8, the said blind comprising bearings (4) exhibiting securing means collaborating with the concave surface of a gutter (2) formed in a shelf according to any one of Claims 1 to 8.

10. Sun blind (3) according to Claim 9, **characterized in that** the said bearings (4) have an exterior shape that hugs the interior shape of the said gutter (2).
